# EUROPEAN PATENT APPLICATION

(11) **EP 2 058 631 A1**
(43) Date of publication of application: **13.05.2009**
(21) Application number: 07425698.3
(22) Date of filing: 06.11.2007
(51) Int. Cl.: G01D 21/02

(54) **Miniaturized sensor device for determining the relative position of two elements mobile with respect to each other and sensing characteristic quantities of a fluid present between the two elements**

(71) Applicant: C.R.F. Società Consortile per Azioni, 10043 Orbassano (Torino) (IT)
(72) Inventor: Pullini, Daniele, 10043 Orbassano (IT)
(74) Representative: Bergadano, Mirko

(57) **Abstract**

A sensor device (1) is described for determining the relative position of two elements (20, 23) mobile with respect to each other and defining a meatus (24) containing lubricating oil. The sensor device (1) comprises a magnetic field sensor (3) that can be applied to one (23) of the two elements (20, 23) to sense the magnetic field produced by a magnetic field source (28) applied to the other element (20), and a fluidic quantity sensor (7) associated with the magnetic field sensor (3) to sense at least one characteristic quantity of the lubricating oil.

## Description

The present invention concerns a miniaturized sensor device for determining the relative position of two elements mobile with respect to each other and sensing characteristic quantities of a fluid present between the two elements.

The present invention finds advantageous, but not exclusive, application in contexts where it is necessary to determine, moment by moment, the position of a mobile element relative to a fixed element in order to determine and consequently control the law of movement. This need is especially felt in the motor field for determining the laws of movement of shafts, mobile parts of ABS, phonic wheels, electromechanical actuators, pistons, injector control valves and intake and exhaust valves, to which the treatment that follows shall make explicit reference, but without any loss in generality.

In the motor field, to determine the relative position of two elements mobile with respect to each other, the use of a sensor device is known of that comprises a magnetic field source, normally a magnetic or electric dipole, which is positioned on one of the two elements, conveniently on the mobile element, and a magnetic field sensor, which is positioned at a certain point of the other element, conveniently the fixed one, to measure the force field present at that point, moment by moment, to produce an output signal based on this measurement and indicative of the relative position of the source with respect to the sensor itself.

Thanks to their characteristics of simplicity and low cost, the Applicant has conducted in-depth research aimed at investigating the possibility of improving sensors of this type in order to also exploit them for performing real-time diagnostics on combustion in the internal combustion engine and, in particular, to evaluate the engine's combustion efficiency in real time, by determining the quantity of pollutants it produces.

The object of the present invention is then to provide a miniaturized sensor device that, in addition allowing determination of the relative position of two elements mobile with respect to each other, can be exploited to carry out real-time combustion diagnostics on an internal combustion engine.

The above object is achieved by the present invention in that it relates to a miniaturized sensor device, as defined in the appended claims.

Further objects, characteristics and advantages of the present invention will become clear from the detailed description that follows and the enclosed drawings, provided purely by way of non-limitative example, where:
- Figure 1 shows a sensor device according to an embodiment of the present invention,
- Figure 2 shows a sensor device according to a different embodiment of the present invention,
- Figure 3 shows a sensor device according to a further embodiment of the present invention,
- Figures 4-7 shows successive phases of a manufacturing process for a sensor device according to the present invention, and
- Figure 8 shows a combustion diagnostic device for an internal combustion engine using the sensor device according to the present invention.

In outline, the present invention is based on the insight of equipping a sensor device of the above-described type, namely formed by a magnetic field source and a magnetic field sensor applied to two elements mobile with respect to each other, with opportune sensor means that also allow the sensing of characteristic quantities of the lubricating oil contained in a meatus present between the two elements and used to reduce the friction between them, in particular density, viscosity, pressure, temperature and conditions of wear and contamination by pollutants and metallic impurities.

Taking into consideration, for example, the application of the sensor device for determining the law of movement of an intake and/or exhaust valve of the engine, in which the source of a force field is conveniently placed in the valve stem while the force field sensor is conveniently placed in the valve guide, this sensor device is able to provide not just information regarding the position of the valve and useful, for example, for implementing closed-loop control for the law of movement of the valve itself, but also information regarding characteristic quantities of the lubricating oil used for reducing friction between the two mobile elements. Given that a single lubricating oil is used for the lubrication of all the parts of the engine, determining the characteristic quantities of that present between valve stem and valve guide where the sensor device is mounted allows the quantity of pollutants produced by the engine to be determined in real time and, in consequence, the efficiency of engine combustion, thereby allowing real-time diagnostics of engine combustion.

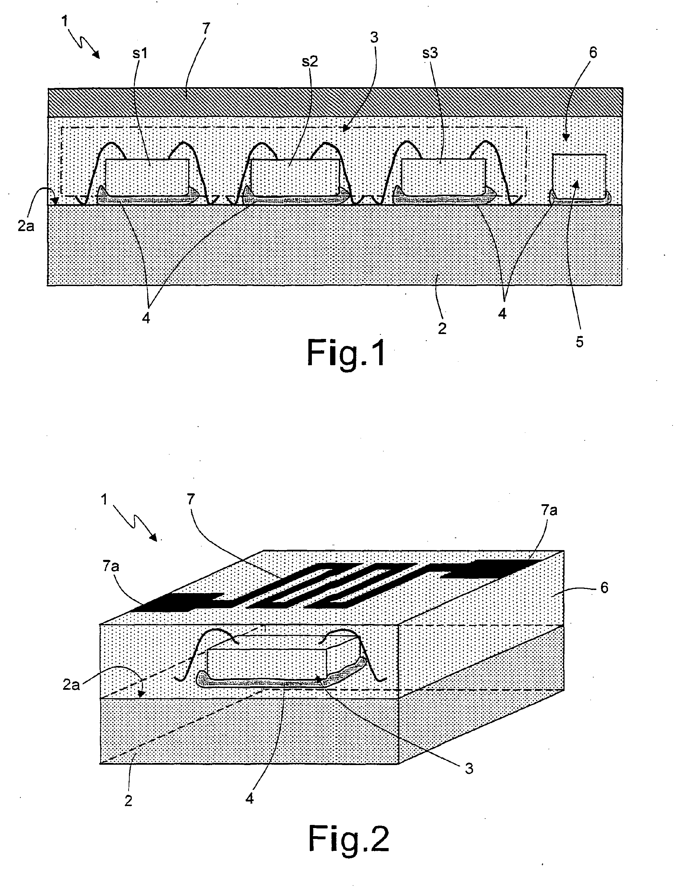

A sensor device made according to one embodiment of the present invention is schematically shown in Figure 1.

The sensor device, indicated in its entirety by reference numeral 1, essentially comprises:
- a substrate 2, alumina for example,
- a magnetic field sensor 3 placed on an upper surface face 2a of the substrate 2 and fixed to it, for example, by gluing with an adhesive paste 4, a silver paste for example, and configured to sense, without contact and at the point in which it is located, the magnetic field produced by the magnetic field source (not shown), and provide an output signal indicative of the relative position of the magnetic field source with respect to the magnetic field sensor itself,
- a packaging material layer 6 formed on the substrate 2, by deposition for example, so as to completely encapsulate the magnetic field sensor 3, and
- a lubricating oil condition sensitive material layer 7 formed on the packaging material layer 6, by deposition for example, so as to be exposed to direct contact with the lubricating oil in use, to provide an output signal indicative of one or more characteristic quantities of the lubricating oil, such as density, viscosity, pressure and temperature for example.

The magnetic field sensor 3 can be a single-chip magnetic sensor and be chosen from the group comprising a Hall-effect sensor, a simple, anisotropic or Giant magnetoresistive sensor, an inductive sensor, a magnetic tunnel junction sensor, an eddy current sensor, etc.

Alternatively, as shown in Figure 1, the magnetic field sensor 3 can be of the type described in European Patent Application EP 06425791.8 filed on 21/11/2006 in the name of the Applicant, namely comprising three distinct magnetic field sensors cooperating with each other to determine the position of the magnetic field source. In particular, the three magnetic field sensors are placed in three distinct points of the upper face 2a of the substrate 2 and provide respective outputs indicative of the intensity and the direction of the magnetic field measured at the respective points of application. The outputs related to the same given moment in time are sent to a computing unit (not shown) that calculates, for each single magnetic field sensor, a respective iso-output surface formed from the location of the points that, if occupied by the source of the magnetic field, would induce the magnetic field sensor to provide the same output. The computing unit then calculates the position of the source of the magnetic field and hence its position with respect to the magnetic field sensors 3 as the point of intersection of the three iso-output surfaces.

In this case, the three single magnetic field sensors could alternatively be of the type made as a single-chip magnetic sensor, via a lithographic process, or of the type made as a multi-chip magnetic sensor, as shown in Figure 1, and the overall magnetic field sensor 3 be formed by opportune electrical connection of the three chips.

As shown in Figure 1, the sensor device can optionally comprise a temperature sensor 5 as well, this also made as a single-chip temperature sensor positioned on the upper surface face 2a of the substrate 2 and fixed to it in a manner similar to that indicated for the magnetic field sensor 3, and formed by a thermocouple or a temperature sensitive material, or a traditional temperature measurement electronic circuit.

With regard to the lubricating oil condition sensitive material 7, this can be chosen from the group including a piezoelectric, ferroelectric or magnetostrictive material or any combination of them. Furthermore, it can be deposited in a manner so as to form a continuous layer over the packaging material layer 6, as shown in Figure 1. Alternatively, as schematically shown in Figure 2, in which identical elements to those shown in Figure 1 are indicated with the same reference numerals, the lubricating oil condition sensitive material 7 can be deposited and successively patterned in a way to form an opportune pattern on the upper face of the packaging material layer 6, a serpentine in the example shown, provided with contact zones 7a at its ends, to which respective bonding wires (not shown) are then connected.

The lubricating oil condition sensitive material 7 can be deposited and simultaneously patterned by screen printing, or be deposited by a spinning process and successively patterned by a conventional photolithographic process or any other technique. In the case in which the lubricating oil condition sensitive material 7 is deposited and simultaneously patterned via screen printing, it is also possible to simultaneously create the passive electrical components, such as resistances, capacitors, pn and Shottky junctions, by simply using different screen printing pastes.

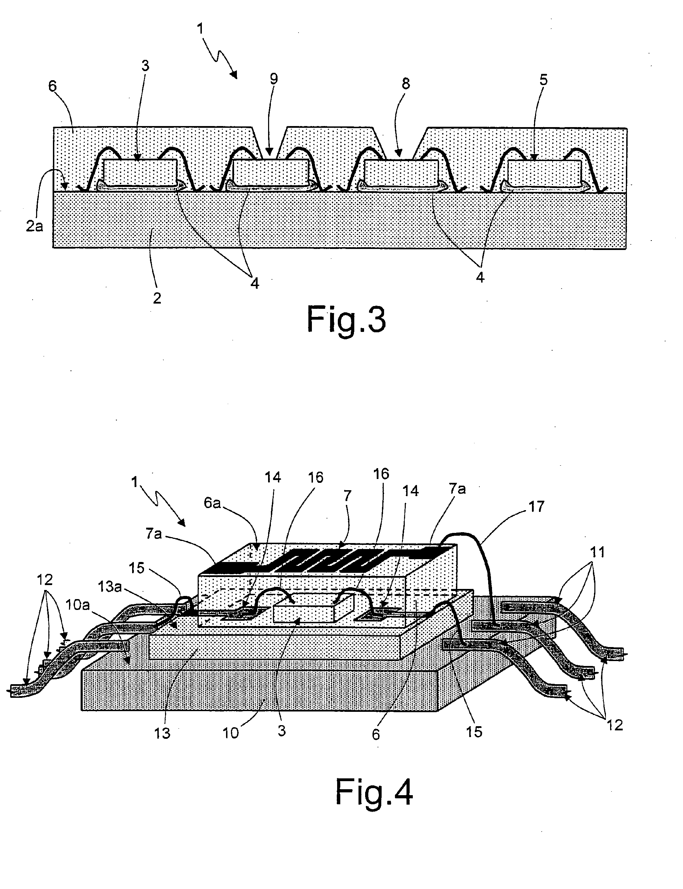

According to a further embodiment shown in Figure 3, in which identical elements to those shown in Figure 1 are indicated with the same reference numerals, the characteristic quantities of the lubricating oil could be measured by an oil sensor 8 of the single-chip oil sensor type, fixed on the upper surface face 2a of the substrate 2 in a similar manner to that indicated for the magnetic field sensor 3.

Furthermore, the sensor device 1 could optionally include a pressure sensor 9 of the single-chip pressure sensor type as well. In this embodiment, both the oil sensor 8 and the pressure sensor 9 are exposed during use to direct contact with the lubricating oil through the respective oil harvesting pockets made in the packaging material layer 6 in correspondence to the same sensors.

In Figures 4-7, a manufacturing process for a sensor device 1 according to the present invention is shown, by way of a non-limitative example, which can reach micron and even nanometre sizes.

According to that shown in Figure 4, a lower substrate 10 is equipped with leads 11, the end sections of which protrude from the lower substrate 10 and define external pins 12 suitable for being connected, in use, to respective conductive tracks (not shown) of a printed circuit (also not shown), usually by soldering. An upper substrate 13 is fixed, by gluing for example, onto the lower substrate 10 and contact pads 14 created on top of it, suitable for being connected to the respective leads 11 via bonding wires 15, usually made of gold. The magnetic field sensor 3 is fixed to the upper surface 13a of the upper substrate 13 in the previously described manner and then opportunely connected to the pads 14 via respective bonding wires 16.

On the upper substrate 12, an internal packaging material layer 6 is then formed, via deposition for example, to completely encapsulate the magnetic field sensor 3, bonding wires 16 and the pads 14, whilst leaving bonding wires 15 and the leads 11 uncovered.

The lubricating oil condition sensitive material layer 7 is then formed on the upper face of the internal packaging material layer 6, via deposition for example, and then patterned in the previously described manner with reference to Figure 2. The contact zones 7a present at the ends of the lubricating oil condition sensitive material layer 7 are then connected to the respective leads 11 via bonding wires 17.

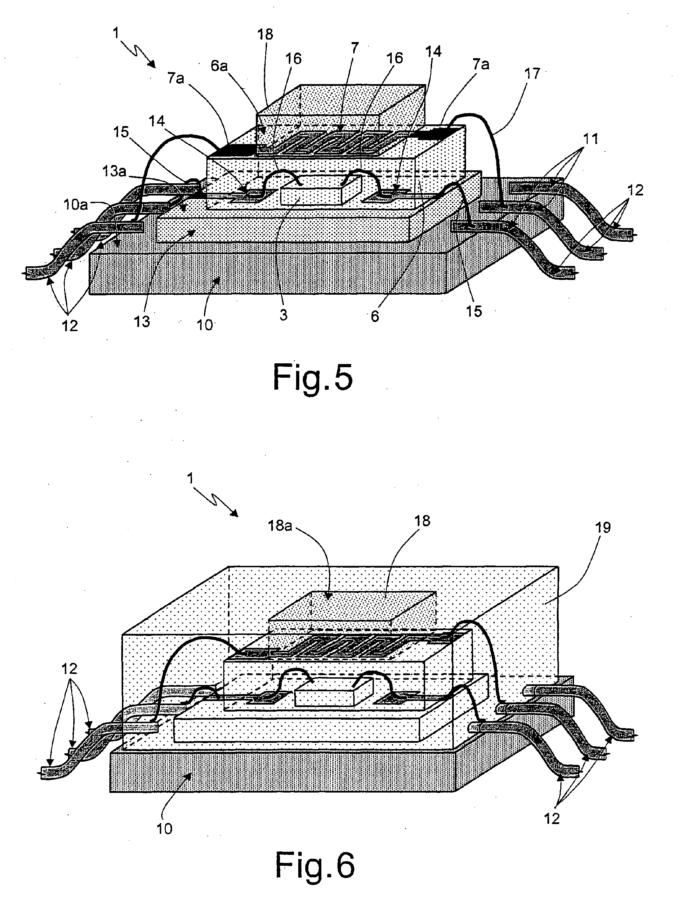

Afterwards, as shown in Figure 5, a layer of photoresist 18 is formed on the lubricating oil condition sensitive material layer 7, via deposition using a spinning process for example, and successively exposed to UV radiation, so as to cover the patterned lubricating oil condition sensitive material layer 7 and leave only the contact zones 7a uncovered.

Following this, as shown in Figure 6, an external packaging material layer 19 is formed, via deposition for example, so as to entirely cover the lower substrate 10 and whatever is arranged upon it up to the level of the layer of photoresist 18, in way that only leaves the pins 12 and the same layer of photoresist 18 uncovered.

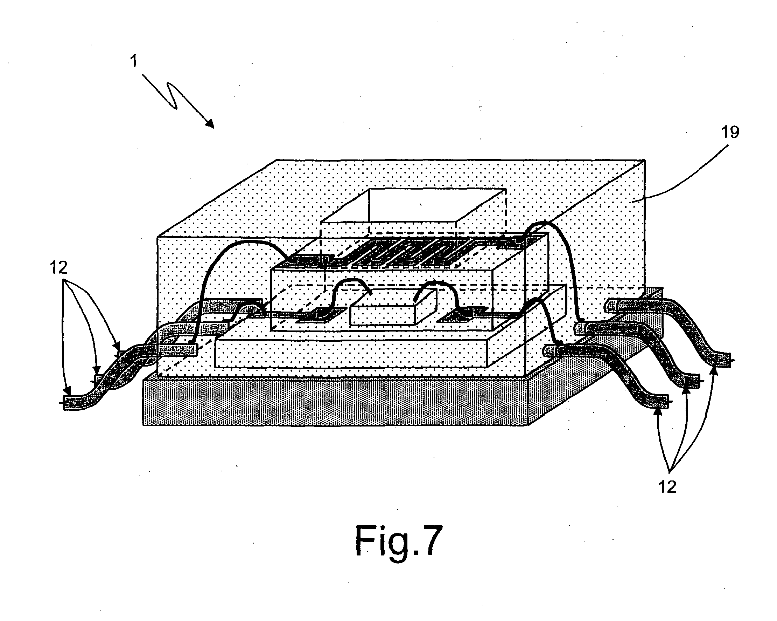

Lastly, as shown in Figure 7, the layer of photoresist 18 is removed, thereby defining an oil harvesting pocket facing the lubricating oil condition sensitive material 7 and able to allow the latter, in use, to come into direct contact with the lubricating oil of which it is wished to determine the characteristic quantities.

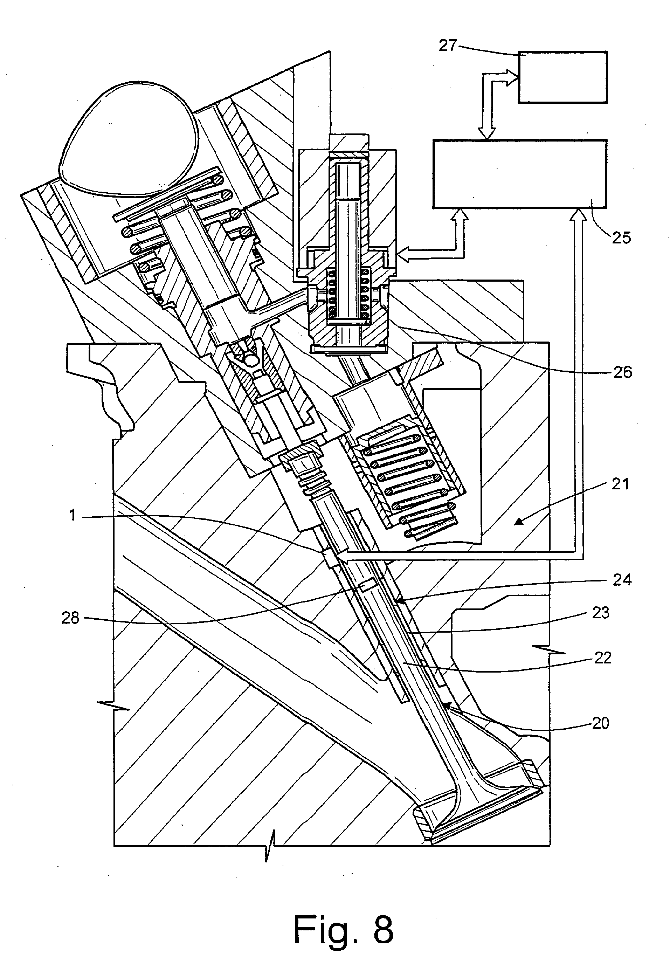

Finally, Figure 8 shows a preferred application of sensor device according to the present invention for determining the law of movement of an air intake valve 20 of an internal combustion engine 21, in which the force field source 28 is conveniently housed in the valve stem 20, while the sensor device 1 according to the present invention is conveniently housed in the valve guide 23, in a way such that it is in direct contact with the lubricating oil present in the meatus 24 between the valve guide 23 and the valve stem 20.

In this way, the sensor device 1 is able to provide both information indicative of the position of the valve stem 20 with respect to the valve guide 23 and information indicative of the characteristic quantities of the lubricating oil in between them. This information is then transmitted to an electronic valve control unit 25 for processing, both for achieving closed-loop control of the position of the air intake valve 20 and for the real-time determination of the quantity of pollutants produced by the engine and, in consequence, the combustion efficiency of the engine itself, in this way performing real-time diagnostics on engine combustion. Based on the outcome of the diagnostics, the electronic valve control unit 25 can operate a solenoid valve 26 for controlling the stoichiometry of the air/fuel mixture fed to the combustion chamber of the engine 21, thereby achieving combustion control.

The transmission of information from the sensor device 1 to the electronic valve control unit 25 can take place either via opportune wired or wireless communication; in the latter case, both the sensor device 1 and the electronic valve control unit 25 must be provided with respective wireless communication modules (not shown).

With regards to the electric power to the sensor device 1 needed for its operation, the sensor device 1 could be independently powered by a micro energy generation (recovery) unit (not shown) such as, for example, a thermoelectric heat-electric energy converter and/or a piezoelectric, ferroelectric or magnetostrictive vibration-electric energy converter and/or a combination of these. For "cold" power, or rather in the absence of heat or vibrational energy, the sensor device 1 could also be equipped with a rechargeable standby battery (not shown).

The electronic valve control unit 25 could be integrated in an electronic engine control unit 27, generally already present on every motor vehicle, or be separate from and communicate with the latter wirelessly or via a Controller Area Network (CAN) of the motor vehicle. In the case where it is separate from the electronic engine control unit 27, the electronic valve control unit 25 receives the travel distance of the air intake valve 20 with respect to a previous position, or the absolute position that the air intake valve 20 must occupy, from the electronic engine control unit 27. The electronic valve control unit 25 controls the travel of the air intake valve 20 and checks the position occupied by the air intake valve 20 in real time via the sensor device 1. Once the air intake valve 20 has reached the desired position, the electronic valve control unit 25 sends a confirmation message to the electronic engine control unit 27.

From what has been described above, the advantages that can be achieved with sensor device 1 according to the present invention are evident. In particular, the sensor device 1 according to the present invention provides both information indicative of the position of two elements mobile with respect to each other, on the basis of which it is possible, for example, to implement closed-loop control of their law of relative movement, and information indicative of the characteristic quantities of the lubricating oil used for reducing friction between the two elements. In the motor field, in which the lubricating oil used to reduce friction between the two mobile elements is the same as that used to lubricate the engine, the latter information can be used, for example, to determine the quantity of pollutants produced by the engine in real time and, consequently, the combustion efficiency of the engine itself, thereby performing real-time diagnostics on engine combustion. Based on the outcome of the diagnostics, it is therefore possible to take action on the stoichiometry of the air/fuel mixture fed to the combustion chamber of the engine to opportunely control engine combustion.

Finally, it is clear that modifications and variants can be made to that described and shown herein without leaving the scope of protection of the present invention, as defined in the enclosed claims.

For example, the magnetic field source could be substituted with any other type of force field source and, in consequence, the magnetic field sensor could be substituted with a corresponding force field sensor.

Furthermore, instead of using a force field sensor able to sense the force field produced by a force field source, determination of the relative position of the two elements mobile with respect to each other could be based on using a position sensor based on any other type of technology. For example, an encoder-type optical read-out composed of a miniaturized laser diode pointer positioned on the valve guide and a variable-reflectance pattern positioned on the valve, with the reflected optical signal being detected by a photodiode.

Finally, it is wished to reassert the fact that inventive principle underlying the present invention finds application not only in the motor field, but in any other field in which it is necessary to determine the relative position of two elements mobile with respect to each other and sense characteristic quantities of a generic fluid present in a meatus defined by the two elements.

## Claims

1. Sensor device (1) for determining the relative position of two elements (20, 23) mobile with respect to each other and defining a meatus (24) containing a fluid, said sensor device (1) comprising:
• a position sensor (3) that can be applied to one (23) of said elements (20, 23) to determine the relative position of said elements (20, 23);
**characterized in that** it further comprises:
• a fluidic quantity sensor (7) associated with said position sensor (3) to sense at least one characteristic quantity of said fluid.

2. Sensor device (1) according to claim 1, also comprising:
• a substrate (2; 13) carrying said position sensor (3), and
• a packaging material layer (6) formed on said substrate (2; 13) in a manner to encapsulate said position sensor (3), and wherein said fluidic quantity sensor (7) comprises:
• a fluid condition sensitive material (7) formed on said packaging material layer (6) in a manner such that, in use, it comes into contact with said fluid.

3. Sensor device (1) according to claim 2, wherein said fluid condition sensitive material (7) forms a continuous layer on said packaging material layer (6) susceptible to being electrically contacted.

4. Sensor device (1) according to claim 2, wherein said fluid condition sensitive material (7) is patterned in a way so as to form a pattern on said packaging material layer, susceptible to being electrically contacted.

5. Sensor device (1) according to any of claims 2 to 4, also comprising:
• a further packaging material layer (19) formed on said fluid condition sensitive material (7) in a way so as to define a fluid harvesting pocket able to allow said fluid condition sensitive material (7), in use, to come into contact with said fluid.

6. Sensor device (1) according to any of claims 2 to 5, also comprising:
• a further substrate (10) upon which said substrate (13) is placed and which is equipped with leads (11) having terminal segments protruding from it and defining pins (12) suitable for being connected, in use, to respective conductive tracks of a printed circuit, and
• electrical connections (15, 16, 17) between said leads (11), said position sensor (3) and said fluid condition sensitive material (7).

7. Sensor device (1) according to claim 1, also comprising:
• a substrate (2) carrying said position sensor (3) and said fluidic quantity sensor (7) in side by side positions, and
• a packaging material layer (6) formed on said substrate (2) in a way so as to define a fluid harvesting pocket in correspondence to said fluidic quantity sensor (7) able to allow the latter, in use, to come into contact with said fluid.

8. Sensor device (1) according to claim 7, wherein said fluidic quantity sensor (7) is of the single-chip type.

9. Sensor device (1) according to any of the preceding claims, wherein said at least one characteristic quantity of said fluid consists of one or more quantities taken from density, viscosity, pressure and temperature.

10. Sensor device (1) according to any of the preceding claims, wherein said position sensor (3) is of the single-chip type.

11. Sensor device (1) according to any of the preceding claims, wherein said position sensor is a force field sensor (3) configured to sense a force field produced by a force field source (28) applied to the other (20) of said elements (20, 23).

12. Sensor device (1) according to claim 11, wherein said force field sensor (1) comprises at least three distinct force field sensors formed on a single chip or on separate chips electrically connected together and configured to provide respective outputs indicative of the force field at the points of the element at which they are applied, a computing unit being provided to receive the outputs provided by the three force field sensors to compute, for each force field sensor, a respective iso-output surface formed from the location of the points that, if occupied by said force field source (28), would induce the generation of the same output by the force field sensor, and to compute a point of intersection of the three iso-output surfaces indicative of the relative position of the two elements (20, 23).

13. Device according to any of the preceding claims, also comprising a temperature sensor (5) and/or a pressure sensor (9).

14. Device according to claim 13 and claim 2 or 6, wherein said temperature sensor (5) and said pressure sensor (9) are placed on said substrate (2) in positions side by side with said position sensor (3) and said fluidic quantity sensor (7), and wherein said packaging material layer (6) comprises a further fluid harvesting pocket in correspondence to said pressure sensor (7) so as to allow the latter, in use, to come into contact with said fluid.

15. Device according to any of the preceding claims, also comprising:
• an independent micro energy generation unit comprising a thermoelectric heat-electric energy converter and/or a piezoelectric, ferroelectric or magnetostrictive vibration-electric energy converter and/or a combination of these, and possibly a rechargeable standby battery for power in the absence of heat or vibrational energy.

16. Sensor device (1) according to any of the preceding claims, also comprising:
• means of connection to connect said sensor device to remote means of electronic processing (25, 27).

17. Sensor device (1) according to claim 16, wherein said means of connection comprise means of wireless communication.

18. Sensor device (1) according to claim 16, wherein said means of connection comprise means of wired communication.

19. Sensing system of motor quantities in an internal combustion engine (21) comprising two elements (20, 23) mobile with respect to each other and defining a meatus (24) containing lubricating oil, **characterized in that** it comprises:
• a sensor device (1) according to any of the preceding claims.

20. System according to claim 19, further comprising:
• means of electronic processing and control (25, 27) configured to receive signals generated by said position sensor (3) and said fluidic quantity sensor (7), for the closed-loop control of the relative position of said elements (20, 23) on the basis of the signal generated by said position sensor (3), and for performing combustion diagnostics on said internal combustion engine (21) on the basis of the signal generated by said fluidic quantity sensor (7).

21. System according to claim 20, wherein the means of electronic processing and control (25, 27) comprise:
• a first electronic control unit (25) connected to said sensor device (1) and dedicated to the closed-loop control of the relative position of said elements (20, 23) and the combustion diagnostics of said internal combustion engine (21), and
• a second electronic control unit (27), separate from and connected to said first electronic control unit (25), dedicated to the control of said internal combustion engine (21), said second electronic control unit (27) also being configured to cooperate with said first electronic control unit (25) for the closed-loop control of the relative position of said elements (20, 23).

22. Internal combustion engine (21) comprising two elements (20, 23) mobile with respect to each other and defining a meatus (24) containing lubricating oil, **characterized in that** it also comprises a sensing system for motor quantities according to any of claims 19 to 21.

23. Internal combustion engine (21) according to claim 22, wherein one of said elements is an air intake valve (20) or a burnt gas exhaust valve (20).

24. Method of manufacture of a sensor device (1) according to any of claims 2 to 6.
